Europäisches Patentamt

European Patent Office

Office européen des brevets

(19)

(11) Numéro de publication : **0 119 913**
**B1**

(12) **FASCICULE DE BREVET EUROPÉEN**

(45) Date de publication du fascicule du brevet :
03.12.86

(51) Int. Cl.⁴ : **B 22 F   3/10**, B 22 F   1/00,
B 22 F   1/02, B 01 J   2/00

(21) Numéro de dépôt : **84400483.8**

(22) Date de dépôt : **09.03.84**

(54) **Procédé de fabrication de pièces en matériau inorganique présentant une forte porosité, utilisable pour la réalisation de pièces en matériau hygroscopique, inflammable ou radioactif.**

(30) Priorité : **14.03.83 FR 8304149**

(43) Date de publication de la demande :
**26.09.84 Bulletin 84/39**

(45) Mention de la délivrance du brevet :
**03.12.86 Bulletin 86/49**

(84) Etats contractants désignés :
**AT DE GB**

(56) Documents cités :
DE-B- 1 288 764
DE-C-   921 564
FR-A- 1 266 824
FR-A- 1 272 687
FR-A- 1 399 287
FR-A- 1 573 863
FR-A- 1 600 816
FR-A- 2 421 473
US-A- 3 264 073

(73) Titulaire : **COMMISSARIAT A L'ENERGIE ATOMIQUE Etablissement de Caractère Scientifique Technique et Industriel**
**31/33, rue de la Fédération**
**F-75015 Paris (FR)**

(72) Inventeur : **Boncoeur, Marcel**
**22, rue Marsoulan**
**F-75012 Paris (FR)**
Inventeur : **Prigent, Yvon**
**10, Allée des Fraises**
**F-91460 Marcoussis (FR)**

(74) Mandataire : **Mongrédien, André et al**
**c/o BREVATOME 25, rue de Ponthieu**
**F-75008 Paris (FR)**

EP 0 119 913 B1

## Description

La présente invention a pour objet un procédé de fabrication de pièces en matériau inorganique présentant une forte porosité.

De façon plus précise, elle concerne la réalisation de pièces présentant une porosité de 70 à 95 %, en particulier de 80-90 %, et ayant une résistance mécanique suffisante pour l'usinage et l'utilisation dans certaines conditions de vibrations et/ou de températures. Elle s'applique de plus à la réalisation de pièces poreuses en matériau oxydable, hygroscopique, inflammable ou radioactif, par exemple en chaux, en chlorure de calcium, en magnésium, en uranium ou en zirconium.

Généralement, on prépare des pièces poreuses par métallurgie des poudres en utilisant un mélange de poudres comprenant des quantités variables de matériau porogène et éventuellement comprimé à froid à un traitement thermique afin d'éliminer le matériau porogène par décomposition ou sublimation et de former ainsi des pores à l'intérieur de la pièce, comme cela est décrit dans les documents FR-A-1 600 816, FR-A-1 266 824, FR-A-1 399 287, FR-A-1 573 863 et FR-A-2 421 473.

Bien que ces procédés donnent des résultats satisfaisants, ils ne permettent pas de contrôler avec précision la texture et la répartition de pores des pièces obtenues. Par ailleurs, il est difficile d'obtenir avec ces procédés des pièces présentant une tenue mécanique satisfaisante pour une porosité aussi élevée que 95 %. Enfin, ces procédés sont mal adaptés au traitement de matériaux hygroscopiques ou inflammables.

La présente invention a précisément pour objet un procédé de fabrication de pièces poreuses, qui pallie ces inconvénients.

Le procédé, selon l'invention, de fabrication de pièces poreuses en matériau inorganique se caractérise en ce qu'il comprend les étapes suivantes :

a) fabriquer des billes en matériau porogène revêtues d'un liant organique et dudit matériau inorganique,

b) comprimer à froid les billes revêtues pour former la pièce, et

c) soumettre la pièce ainsi obtenue à un traitement thermique sous vide effectué à une température suffisante pour éliminer le matériau porogène par volatilisation.

Avantageusement, les billes de matériau porogène ont des dimensions de 0,5 à 1,5 mm et plus spécialement 1 mm, ce qui permet de créer des pores de dimensions importantes et d'obtenir ainsi des pièces ayant une porosité de 70 à 95 %.

Grâce à l'emploi de billes en matériau porogène revêtues d'un liant organique et du matériau inorganique dont on veut réaliser les pièces, le procédé de l'invention permet de contrôler avec précision la grosseur et la répartition des pores dans la pièce obtenue. Par ailleurs, en choisissant un matériau de granulométrie appropriée, on contrôle également la texture du produit. En revanche, lorsque l'on part d'une poudre de matériau inorganique dans laquelle est dispersé le matériau porogène à l'état de granulés ou de poudre, il est difficile d'obtenir un produit homogène avec des pores répartis uniformément, notamment en raison de la différence de densité entre le matériau porogène et le matériau inorganique. En effet, dans le cas de matériaux inorganiques de densité élevée, comme le tungstène ou l'uranium, il est difficile d'éviter la décantation du mélange et de ce fait, une répartition irrégulière des pores dans la pièce obtenue. Par ailleurs, on ne peut contrôler avec précision l'épaisseur de matériau inorganique disposé entre les pores de la pièce.

Le procédé de l'invention peut être utilisé pour fabriquer des pièces poreuses en matériau inorganique dispersé dans un liant organique tel qu'un polymère thermoplastique.

Cependant, on utilise plus souvent le procédé de l'invention pour la fabrication de pièces poreuses constituées uniquement de matériau inorganique et dans ce cas, le procédé comprend deux étapes supplémentaires consistant :

d) à éliminer le liant organique par traitement thermique sous vide, et

e) à fritter ensuite la pièce ainsi obtenue.

Selon l'invention, le matériau porogène utilisé doit répondre à certaines caractéristiques qui dépendent en particulier de la nature du matériau inorganique utilisé pour la fabrication de la pièce.

En effet, le matériau porogène doit pouvoir se volatiliser à une température inférieure à la température de frittage du matériau inorganique, être inerte vis-à-vis de ce matériau dans les conditions de mise en œuvre du procédé, pouvoir être fabriqué sous la forme de billes présentant un diamètre de 0,5 à 1,5 mm et être capable d'être mis en forme par compression à froid.

A titre d'exemples de matériaux susceptibles d'être utilisés, on peut citer le naphtalène, l'anthracène, le camphre, les polyaldéhydes comme les polyformaldéhydes et les paraformaldéhydes, les polyoxyméthylènes, l'iode, le paradichlorobenzène et des sels d'ammonium tels que le bromure de tétraméthylammonium, l'iodure de tétraméthylammonium, le carbonate d'ammonium. De préférence, on utilise le naphtalène et on lui ajoute une quantité de ferrocène suffisante pour que le mélange fondu de naphtalène et de ferrocène présente à une température de 80 °C une densité supérieure à la densité de l'eau ; ceci permet en particulier d'obtenir les billes dans de bonnes conditions par pulvérisation ou émulsion dans l'eau du mélange fondu de naphtalène et de ferrocène. Généralement, la teneur en ferrocène du mélange est de 10 à 20 % en poids. En effet, la densité du ferrocène est de 1,5 alors que la densité du naphtalène et de l'eau à 80 °C sont de 0,97. Aussi, l'adjonction de 10 à 20 % de ferrocène au naphtalène permet d'obtenir un mélange présentant à 80 °C une densité nettement supérieure à celle de l'eau.

Selon l'invention, le liant organique est avantageusement un polymère thermoplastique qui, de préférence, peut être éliminé par traitement thermique à des températures modérées sans provoquer une contamination de la pièce, par exemple par dépôt de carbone. On utilise en particulier des polymères susceptibles d'être dépolymérisés et transformés en vapeur à des températures de 300 à 400 °C.

A titre d'exemples de tels polymères, on peut citer le polystyrène, le polyalphaméthylstyrène et le polyméthacrylate de méthyle.

Comme dans le cas du matériau porogène, le liant organique doit être inerte chimiquement vis-à-vis du matériau inorganique. De même, il ne doit pas réagir avec le matériau porogène dans les conditions de mise en œuvre du procédé. Par ailleurs, il est préférable, dans la plupart des cas, que le liant soit soluble dans le matériau porogène.

Selon un premier mode de mise en œuvre du procédé de l'invention, on fabrique directement les billes de matériau porogène revêtues de liant organique et de matériau inorganique. Dans ce cas, on prépare un mélange fondu du matériau porogène et du liant organique contenant en suspension une poudre du matériau inorganique, puis on met ce mélange fondu sous la forme de billes de diamètres voulus, soit par pulvérisation ou émulsion dans l'eau, soit par pulvérisation dans un gaz. Lorsqu'on utilise la technique de pulvérisation ou d'émulsion dans l'eau, il est nécessaire que le matériau inorganique soit insensible à l'eau.

Dans ce premier mode de mise en œuvre du procédé de l'invention, on transforme le mélange fondu en gouttelettes par émulsion ou pulvérisation dans l'eau chaude, et en refroidissant ces gouttelettes, celles-ci se transforment en billes de matériau porogène revêtues du matériau inorganique et du liant organique. En effet, lors du refroidissement, le liant organique formateur de film migre vers la surface externe des gouttelettes en entraînant la poudre de matériau inorganique.

Généralement le mélange de départ utilisé contient :
— 70 à 92 % en volume de matériau porogène,
— 1,5 à 6 % en volume de liant, et
— 2 à 30 % en volume de matériau inorganique.

La poudre de matériau inorganique a généralement une granulométrie inférieure à 200 μm, et de préférence inférieure à 50 μm.

De préférence, dans ce premier mode de mise en œuvre du procédé de l'invention, on transforme ledit mélange fondu en gouttelettes par pulvérisation de ce mélange dans l'eau chaude, en utilisant une buse comportant une buse externe dans laquelle on introduit l'eau chaude et une buse interne dans laquelle on introduit le mélange fondu, de façon à diviser en gouttelettes le mélange fondu évacué par la buse interne, et on refroidit ensuite ces gouttelettes pour former les billes de matériau porogène revêtues du matériau inorganique et du liant organique.

La pulvérisation dans l'eau chaude peut être réalisée au moyen d'une buse à deux fluides, le diamètre intérieur de la buse interne par laquelle est évacué le matériau fondu étant de 0,6 à 1 mm et le diamètre intérieur de la buse externe par laquelle est évacuée l'eau chaude étant de 3 à 6 mm. Ainsi, en injectant de l'eau chaude dans la buse externe et en faisant s'écouler dans la buse interne le mélange fondu de matériau porogène contenant le liant organique et les particules de matériau inorganique, on obtient des gouttes sphériques qui se solidifient en tombant par gravité dans la partie froide d'un réservoir contenant de l'eau. Le diamètre de la buse interne et les conditions d'écoulement de l'eau dans la buse externe sont choisis de façon à obtenir des billes de diamètre approprié.

On peut aussi obtenir les billes de matériau porogène revêtues de liant organique et de matériau inorganique par émulsion dans l'eau chaude du mélange fondu de matériau porogène et de liant organique contenant la poudre de matériau inorganique. Dans ce cas, on soumet à une forte agitation le mélange fondu dispersé dans un volume d'eau chaude représentant au moins le double en volume du mélange fondu, de façon à former une émulsion du type huile dans l'eau, puis on refroidit brusquement l'émulsion par addition d'eau froide et les gouttelettes du mélange fondu se solidifient avant la démixion.

On peut enfin obtenir les billes de matériau porogène revêtues de liant organique et du matériau inorganique par pulvérisation du mélange fondu à l'aide d'un gaz chaud. Dans ce cas, on utilise également une buse à deux fluides, en introduisant dans la buse interne le mélange fondu de matériau porogène et de liant organique contenant les particules du matériau inorganique, et on disperse ce mélange sous la forme de gouttelettes par injection d'un gaz chaud dans la buse externe. Les gouttelettes dispersées sont refroidies ensuite dans un gaz froid et elles se transforment ainsi en billes.

Lorsqu'on utilise cette dernière technique pour fabriquer les billes, il est nécessaire que le matériau inorganique ne réagisse ni avec le gaz éjecté par la buse, ni avec le gaz de refroidissement.

Ainsi, ce premier mode de mise en œuvre du procédé de l'invention ne convient pas pour la fabrication de pièces poreuses en matériau hygroscopique, facilement oxydable et/ou radioactif.

Aussi, selon un second mode de mise en œuvre du procédé de l'invention, spécialement adapté à la réalisation de pièces poreuses en matériau hygroscopique, facilement oxydable et/ou radioactif, on fabrique tout d'abord des billes en matériau porogène et l'on revêt ensuite les billes ainsi obtenues du liant organique et dudit matériau inorganique en pulvérisant sur ces billes maintenues à l'état de lit fluidisé dans un gaz inerte, une suspension d'une poudre dudit matériau inorganique dans une solution dudit liant dans un solvant volatil ne dissolvant pas et ne réagissant pas avec ledit matériau inorganique.

Les solvants organiques susceptibles d'être utilisés sont par exemple le toluène, le xylène, le chloroforme, le dioxane et la cyclohexanone.

Dans ce second mode de mise en œuvre du procédé de l'invention, on peut fabriquer les billes de matériau porogène en utilisant les techniques décrites précédemment de pulvérisation ou d'émulsion dans l'eau, et de pulvérisation dans un gaz, mais en partant d'un mélange fondu du matériau porogène contenant éventuellement une partie du liant organique.

De préférence, on fabrique les billes en matériau porogène contenant éventuellement une partie du liant organique, en transformant en gouttelettes le matériau porogène à l'état fondu ou un mélange fondu du matériau porogène et du liant organique par pulvérisation dans l'eau chaude au moyen d'une buse comportant une buse interne dans laquelle on introduit le matériau porogène fondu ou le mélange fondu et une buse externe dans laquelle on introduit l'eau chaude de façon à diviser en gouttelettes le matériau ou le mélange fondu évacué par la buse interne, et en refroidissant ensuite les gouttelettes ainsi obtenues pour former les billes de matériau porogène éventuellement revêtues de liant organique.

Dans le cas où le matériau inorganique est un produit hygroscopique, lorsque les billes de matériau porogène ont été fabriquées par émulsion ou dispersion dans l'eau, on soumet celles-ci à un traitement intermédiaire de séchage avant de réaliser l'opération de revêtement. Ce traitement peut consister en un séchage à la température ambiante sous vide ou sans balayage d'azote ou d'air sec, les billes séchées étant ensuite stockées dans des récipients étanches contenant un agent déshydratant.

Pour réaliser le revêtement, on introduit les billes en matériau porogène dans une colonne cylindrique d'axe vertical dont la partie inférieure est tronconique et on les maintient dans cette colonne à l'état de lit fluidisé au moyen d'un gaz inerte anhydre injecté à la base de la partie tronconique. Une buse d'atomisation placée également à la base de la partie tronconique permet de pulvériser de bas en haut suivant un angle solide d'environ 20° une suspension de la poudre de matériau inorganique dans une solution du liant comportant le solvant suffisamment volatil. De cette façon, les billes en matériau porogène qui contiennent éventuellement une certaine quantité de liant se recouvrent progressivement d'une couche de poudre adhérente.

Dans ce mode de réalisation du procédé de l'invention, la buse de pulvérisation utilisée pour l'opération de revêtement comprend une partie interne dans laquelle circule la suspension, qui présente un diamètre constant et supérieur au diamètre de l'orifice de sortie de la buse, cette partie interne étant de plus raccordée à un réservoir d'alimentation en suspension par une conduite de même diamètre ne comportant pas de coude à faible rayon de courbure et ayant une partie souple utilisée dans une pompe péristaltique. Ceci permet en particulier d'éviter une sédimentation des particules à l'intérieur de la buse ou de la conduite d'alimentation.

Ce second mode de réalisation du procédé de l'invention se révèle particulièrement intéressant pour réaliser le revêtement de billes en matériau porogène au moyen de matériaux difficiles à manipuler en raison de leur réactivité avec l'eau et/ou l'oxygène et l'air ou de leur radioactivité. En effet, dans le cas de matériaux radioactifs, l'appareil de revêtement qui est de dimensions relativement faibles peut être disposé dans une boîte à gants sous atmosphère contrôlée.

Dans le cas de matériaux réactifs avec l'eau et/ou l'oxygène, cette opération de revêtement peut être effectuée en toute sécurité en l'absence d'eau et d'oxygène, en utilisant un solvant organique anhydre et en réalisant l'opération de revêtement sous atmosphère de gaz inerte anhydre.

Pour cette opération de revêtement, il est préférable que la poudre du matériau inorganique en suspension dans la solution de liant organique ait une granulométrie inférieure à 200 $\mu$m et, mieux encore, inférieure à 50 $\mu$m, ce qui facilite la manipulation de la suspension et permet d'obtenir un revêtement satisfaisant.

Ce second mode de réalisation du procédé de l'invention peut également être utilisé lorsque le solvant organique de la suspension est capable de dissoudre le matériau porogène constituant les billes. En effet, en opérant dans des conditions appropriées, on peut éviter cette dissolution en évaporant le solvant lors de la pulvérisation de la suspension, avant qu'il ne vienne en contact avec les billes de matériau porogène.

Selon l'invention, après la réalisation de l'étape a) de fabrication des billes en matériau porogène revêtues de liant organique et de matériau inorganique, on comprime à froid les billes revêtues pour former la pièce. Cette opération peut être réalisée par compression uniaxiale ou par compression isostatique. Les pressions utilisées dépendent en particulier de la nature du matériau utilisé. Généralement on opère sous des pressions de 150 à 600 MPa.

On réalise ensuite l'étape c) qui consiste à soumettre la pièce à un traitement thermique sous vide pour éliminer le matériau porogène par sublimation. Ce traitement est généralement effectué à des températures inférieures à 100 °C, par exemple à des températures de 50 à 70 °C, dans le cas d'un mélange de naphtalène et de ferrocène.

A la suite de cette opération, la pièce qui est maintenant constituée du matériau inorganique et du liant organique possède une structure caractérisée par une porosité double : une macroporosité très importante qui correspond aux pores créés par le départ des billes de matériau porogène et une microporosité située dans le matériau qui est très faible devant la macroporosité. Une telle pièce poreuse composite peut être utilisée dans certaines applications qui dépendent de la nature et de la quantité du matériau inorganique par rapport à la quantité de liant organique.

Dans la plupart des cas, on poursuit le traitement thermique pour éliminer le liant organique et on fritte ensuite le matériau inorganique. Généralement, l'élimination du liant est réalisée sous vide, à une température de 300 à 400 °C ; l'opération de frittage est réalisée ensuite par traitement thermique de la pièce à une température qui est choisie en fonction de la nature du matériau inorganique. De même, l'atmosphère et la durée du frittage dépendent de la nature du matériau inorganique utilisé. Par ailleurs, comme dans les traitements de frittage classiques, la température, l'atmosphère et la durée de frittage sont choisies en fonction du degré de frittage que l'on veut obtenir. Dans le cas où le matériau inorganique est du nickel, on peut par exemple réaliser le frittage sous hydrogène à une température de 600 °C pendant 1 à 2 heures.

A la suite du frittage, on obtient une pièce poreuse comportant des pores de diamètre important qui correspondent sensiblement aux dimensions des billes de matériau porogène, les parois des pores étant tapissées par le matériau inorganique qui a été consolidé par frittage.

Ainsi, le procédé de l'invention permet l'obtention de pièces poreuses ayant des dimensions de pores contrôlées. De plus, on peut classer préalablement les billes de matériau porogène en fonction de leurs dimensions et n'utiliser pour la fabrication des pièces poreuses que des billes de dimensions voisines, ce qui permet d'obtenir en fin d'opération une structure de pores régulière et contrôlée. Dans le cas de la pulvérisation dans l'eau chaude à l'aide d'une buse double, la sphéricité des billes est très bonne et les dimensions sont peu dispersées.

Par ailleurs, de nombreux matériaux inorganiques peuvent être utilisés, et l'on peut de ce fait obtenir des pièces poreuses de caractéristiques variées. A titre d'exemple de matériaux inorganiques susceptibles d'être utilisés, on peut citer les métaux comme le cuivre, le béryllium et le nickel, les métalloïdes comme le bore, les alliages, les matières céramiques telles que les oxydes, les carbures, les siliciures et les nitrures, et certains composés difficiles à manipuler comme les hydrures et les halogénures de métaux alcalins et alcalino-terreux, par exemple le fluorure de magnésium.

De plus, le procédé de l'invention permet dans certaines conditions l'obtention de matériaux poreux présentant pratiquement une porosité fermée et de tels matériaux sont intéressants dans de nombreux domaines par exemple pour l'industrie aérospatiale.

D'autres avantages et caractéristiques de l'invention apparaîtront mieux à la lecture de la description qui suit se référant aux dessins annexés sur lesquels :

la figure 1 représente de façon schématique une installation de fabrication de billes par pulvérisation dans l'eau,

la figure 2 représente schématiquement une installation de fabrication de billes par atomisation dans un gaz,

la figure 3 représente schématiquement une installation de revêtement de billes, utilisable dans le second mode de mise en œuvre du procédé de l'invention,

la figure 4 représente en coupe la buse utilisée dans le dispositif de la figure 3, et

la figure 5 représente schématiquement un four de traitement thermique utilisable pour la mise en œuvre du procédé de l'invention.

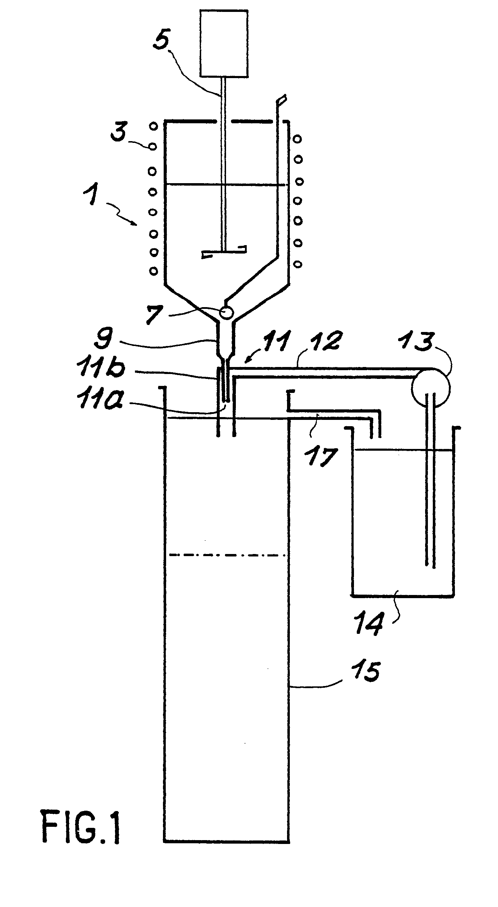

Sur la figure 1, on voit que l'installation comprend un réservoir 1 muni d'une résistance chauffante 3 pour porter à la température voulue le matériau porogène contenant éventuellement le liant organique et la poudre de matériau inorganique.

Ce réservoir 1 est muni également d'un agitateur 5 et d'un système d'obturation 7. A sa partie inférieure, il se prolonge par un tube 9 et une buse 11 présentant une partie interne 11a par laquelle peut s'écouler le mélange fondu provenant du réservoir 1 et une partie externe 11b dans laquelle on introduit par la conduite 12 munie d'une pompe 13 de l'eau chaude provenant du réservoir 14. Le tube 9 débouche dans une colonne 15 remplie d'eau froide et l'eau chaude qui s'écoule par la buse 11b dans la partie supérieure de la colonne est recyclée par la conduite de trop-plein 17 dans le réservoir thermostaté 14.

Pour obtenir des billes dans cette installation, on procède de la façon suivante :

On introduit tout d'abord le matériau porogène et éventuellement le liant organique et la poudre de matériau inorganique dans le réservoir 1, et on le porte à la température voulue au moyen de la résistance 3 tout en soumettant l'ensemble à une agitation à l'aide de l'agitateur 5. On porte également à la température voulue l'eau du réservoir 14. Lorsque le mélange fondu et l'eau sont à la température voulue, on fait circuler l'eau dans la partie externe 11b de la buse et on ouvre l'obturateur 7. A la sortie de la buse, le mélange fondu qui s'écoule par la buse interne 11a est dispersé sous formes de gouttelettes qui tombent par décantation dans la colonne d'eau 15 et qui, en se refroidissant dans la partie inférieure de la colonne, prennent la forme de billes ayant un diamètre pratiquement uniforme. Dans cette installation, on règle les dimensions des billes en choisissant de façon appropriée le diamètre de la buse interne 11a et le débit de l'eau dans la buse externe 11b.

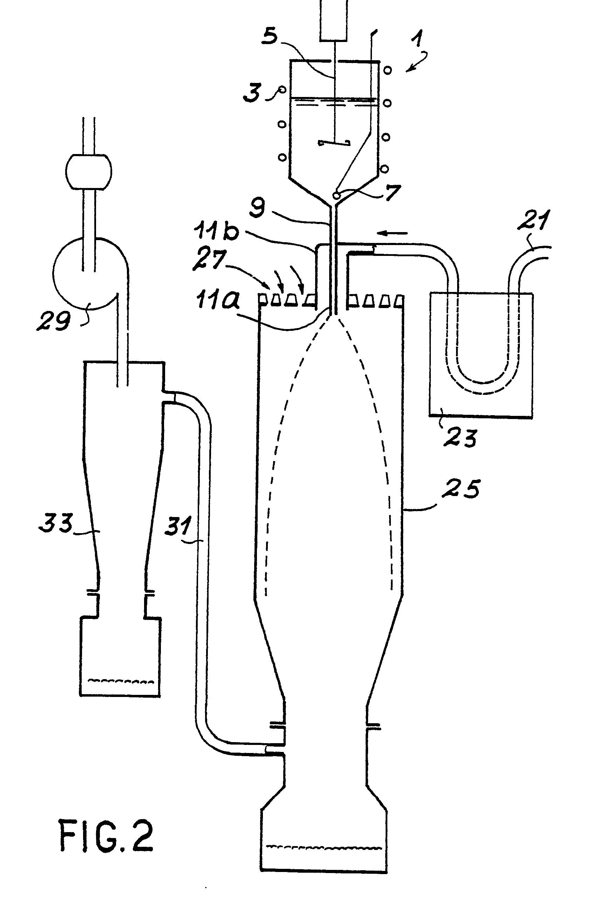

Sur la figure 2, on a représenté une installation de fabrication de billes de matériau porogène par atomisation dans un gaz. Cette installation comprend comme l'installation de la figure 1, un réservoir 1 muni d'une chemise chauffante 3, d'un agitateur 5 et d'un obturateur 7. Le réservoir 1 est prolongé également à sa partie inférieure par un conduit 9 et une buse 11 comportant une buse interne 11a pour l'écoulement du mélange fondu et une buse externe 11b pour l'écoulement d'un gaz introduit dans la buse par la conduite 21 après avoir traversé un réchauffeur 23. A la sortie de la buse 11a, le mélange fondu est éjecté sous la forme de gouttelettes par le gaz chaud sortant de la buse 11b et les gouttelettes tombent dans une colonne 25 munie à sa partie supérieure d'arrivées 27 de gaz froid. A la partie inférieure de la colonne 25, le gaz froid est entraîné par une turbine 29 dans un conduit 31 qui traverse un séparateur cyclone 33. Comme dans l'installation représentée sur la figure 1, on porte tout d'abord à la température voulue le mélange présent dans le réservoir 1, puis on l'introduit dans la buse de pulvérisation 11, en introduisant simultanément dans cette buse, le gaz chaud. A la sortie de la buse, on obtient des gouttelettes liquides qui se solidifient par refroidissement au contact du gaz froid et sont recueillies à la partie inférieure de la colonne 25. Les particules de dimensions faibles sont évacuées avec le gaz froid et séparées dans le cyclone 33.

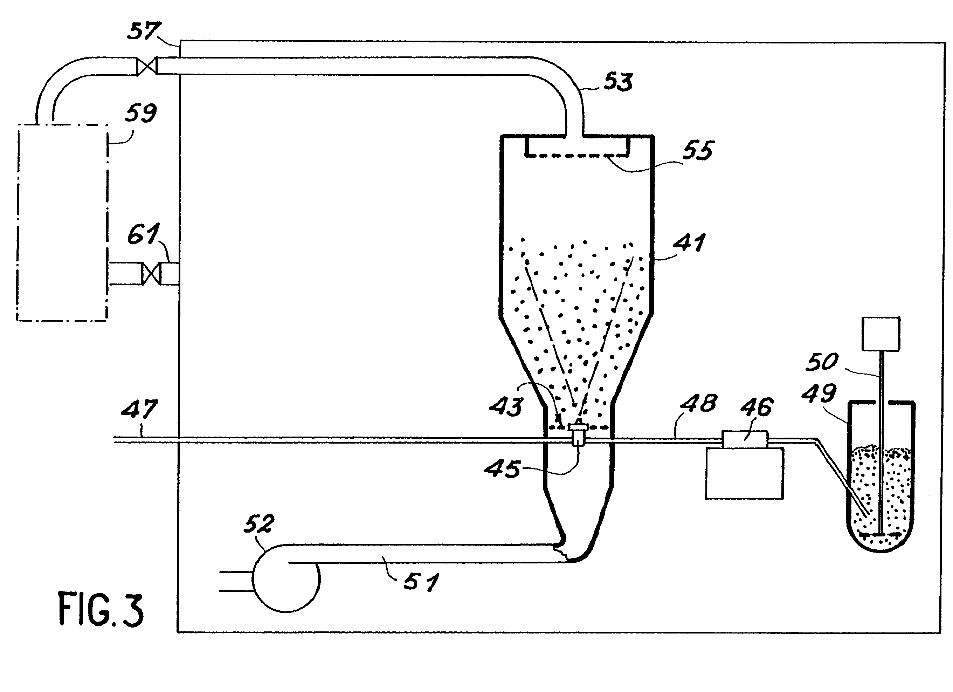

Sur la figure 3, on a représenté une installation de revêtement utilisable dans le second mode de mise en œuvre du procédé de l'invention. Cette installation comprend un récipient 41 présentant une partie supérieure cylindrique d'axe vertical et une partie inférieure tronconique. A sa partie inférieure, le récipient est muni d'un filtre 43 retenant les billes à revêtir et d'une buse de pulvérisation 45 alimentée, d'une part en gaz par la conduite 47, et d'autre part, en suspension de la poudre de matériau inorganique par la conduite 48 reliée au réservoir 49 muni d'un agitateur 50 par une pompe 46.

Pour obtenir la fluidisation du lit de billes, la partie inférieure tronconique du récipient 41 est reliée par une conduite 51 à un compresseur 52. A sa partie supérieure, le récipient 41 est relié à une conduite de sortie de gaz 53 et il est muni d'un filtre 55 pour éviter la sortie des billes dans la conduite 53.

L'ensemble est disposé dans une boîte à gants 57 et le gaz qui circule dans la conduite 53 est soumis à un traitement de purification dans l'installation 59 avant d'être recyclé à l'intérieur de la boîte à gants par la conduite 61.

Pour réaliser une opération de revêtement, on introduit un lot de billes dans le récipient 41, puis on met en marche le compresseur 52 qui comprime le gaz présent dans la boîte à gants 57 et l'introduit sous pression par la conduite 51 dans le récipient 41 afin d'obtenir une fluidisation du lit de billes. On introduit alors par la buse 45 la suspension de poudre de matériau inorganique dans une solution du liant organique en alimentant également la buse en gaz comprimé par la conduite 47. Lors de cette pulvérisation, le solvant est volatilisé et le liant et les particules de poudre de matériau inorganique sont disposés sur les billes du lit fluidisé. Les gaz qui s'échappent du récipient 41 comprennent le gaz de fluidisation et la vapeur de solvant organique, celle-ci est séparée du gaz de fluidisation par condensation dans l'installation 59 constituée par exemple par un piège refroidi à l'azote liquide et le gaz purifié est recyclé dans la boîte à gants 57.

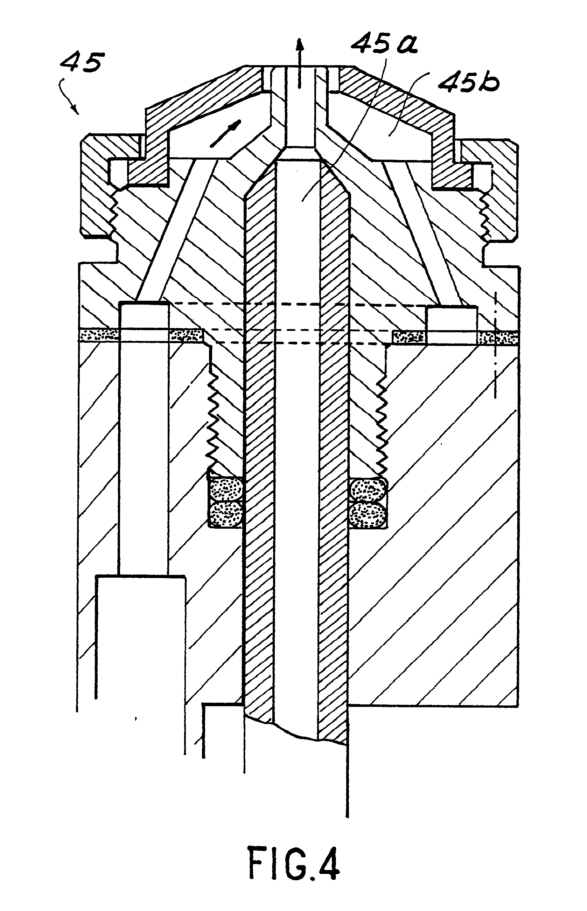

Sur la figure 4 qui est une vue agrandie de la buse 45 de la figure 3, on voit que la buse 45 comporte une partie interne 45a qui a un diamètre constant et qui est destinée à la circulation de la suspension. Le diamètre de cette partie interne est plus grand que le diamètre de l'orifice d'éjection de la buse. En revanche, dans la partie 45b qui entoure la partie 45a et sert à véhiculer le gaz, il n'est pas nécessaire d'avoir une section constante. En effet, on utilise une section constante dans la partie 45a afin d'éviter un dépôt des particules de poudre dans le corps de la buse et de limiter les pertes de charge à l'intérieur de celle-ci. De même, la conduite 48 a une section constante identique à la section de la partie 45a et elle ne présente pas de coudes à faible rayon de courbure afin d'éviter le dépôt de la poudre. De cette manière l'homogénéité de la suspension pulvérisée est conservée pendant la durée de l'enrobage.

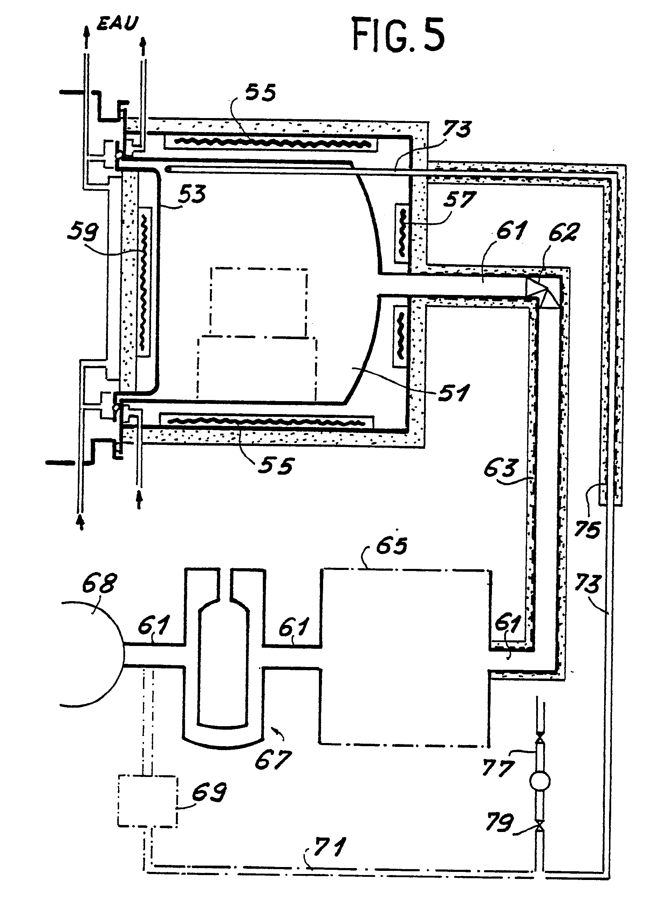

Sur la figure 5 on a représenté un four de traitement thermique utilisable, 1°) pour éliminer le porogène par sublimation à des températures modérées, par exemple à 60 °C lorsqu'il s'agit d'un mélange de naphtalène et de ferrocène, 2°) pour éliminer le liant entre 300 et 400 °C, le tout sous vide, et 3°) pour fritter ensuite la pièce sans avoir à la déplacer avec la possibilité de réaliser ce frittage sous vide ou sous atmosphère de gaz.

Ce four est un four à moufle chauffé par des résistances électriques. Le moufle 51 est en acier inoxydable compatible avec l'hydrogène ainsi que la partie intérieure de la porte 53. Le chauffage du four est réalisé par trois groupes de résistances électriques régulées qui sont respectivement les résistances latérales 55, la résistance arrière 57 et la résistance de la porte 59. Un circuit de refroidissement à l'eau est prévu pour refroidir la porte 53 et les joints du four. Sur sa partie arrière, le four est muni d'une conduite d'extraction 61 munie d'une vanne 62 qui peut être chauffée également par des résistances électriques 63 jusqu'à son entrée dans un condenseur 65 refroidi à l'eau. A la sortie de ce condenseur, la conduite 61 traverse un piège à azote liquide 67 et elle est raccordée soit à une pompe à vide 68, soit à une pompe sèche 69 qui est reliée à une conduite 71 débouchant dans la conduite 73 d'introduction de gaz dans le four. Avant son entrée dans le four, une partie de la conduite 73 est associée à une chemise chauffante 75 permettant de chauffer la conduite à la température du four. La conduite 73 est reliée par ailleurs à une conduite d'introduction de gaz 77 munie d'une vanne 79.

Le fonctionnement de ce four de traitement est le suivant.

Lorsqu'on veut réaliser le traitement thermique d'élimination du porogène à basse température, on porte le four à une température de 60 °C au moyen des résistances chauffantes 55, 57 et 59 sans mettre en circulation l'eau de refroidissement de la porte 53. On porte également à la même température la conduite 61 au moyen des résistances électriques 63 et on raccorde cette conduite à la pompe à vide 68. Ainsi on extrait continuellement du four le matériau porogène à l'état gazeux qui se condense à l'état solide dans le condenseur 65, les dernières traces de porogène étant recueillies dans le piège 67. Grâce au chauffage des parois et de la conduite 61, on évite toute possibilité de formation de points froids à l'intérieur du four et de ce fait une condensation du porogène à l'intérieur du four ou dans la conduite 61.

Lorsqu'on veut réaliser le traitement thermique de frittage à haute température allant par exemple jusqu'à 900 °C au moyen de ce four, on porte alors le four à la température voulue au moyen des résistances électriques et l'on met en œuvre la circulation d'eau assurant le refroidissement de la porte 53. On peut introduire dans le four l'atmosphère voulue (par exemple de l'hydrogène) par l'intermédiaire des conduites 77 et 73 et de la vanne 79 ou mettre le four sous vide en utilisant la pompe à vide 68 comme précédemment.

On peut aussi assurer une circulation de gaz en circuit fermé à l'intérieur du four au moyen de la pompe sèche 69 et des conduites 71 et 73. Ce four permet ainsi de réaliser successivement dans la même enceinte, l'élimination du porogène, l'élimination du liant organique et le frittage du matériau inorganique, ce qui permet d'éviter en particulier la manipulation des pièces poreuses fragiles, non encore consolidées par frittage.

Les exemples suivants sont donnés à titre non limitatif pour illustrer le procédé de l'invention.

Exemple 1

Fabrication d'une pièce poreuse en cuivre.

Dans cet exemple, on utilise le premier mode de mise en œuvre du procédé de l'invention et on prépare directement par dispersion dans de l'eau des billes de matériau porogène revêtues de liant organique et de poudre de cuivre en utilisant l'installation de la figure 1. On introduit dans le réservoir 1 un mélange comprenant :

— 90 % en volume de matériau porogène constitué par 85 % de naphtalène et 15 % de ferrocène,

— 6 % en volume de liant organique constitué par du polystyrène, et

— 4 % en volume d'une poudre de cuivre ayant une granulométrie inférieure à 50 µm.

On porte ensuite ce mélange à la température voulue de 80 °C et on le pulvérise à cette température avec l'eau chaude portée également à la température de 80 °C en utilisant une buse dont la buse interne 11a a un diamètre de 0,6 mm avec un débit d'eau chaude de 0,5 l/min. Les gouttelettes du mélange fondu sont refroidies lors de leur sédimentation dans la partie inférieure de la colonne et on obtient ainsi des billes ayant un diamètre de 0,5 à 1,5 mm.

On soumet alors ces billes à une compression isostatique sous 180 MPa de façon à obtenir un bloc parallélépipédique de section carrée ayant 500 mm de côté et une hauteur de 200 mm, puis on soumet le bloc à un traitement thermique sous vide effectué à une température de 70 °C pendant 24 heures pour éliminer le naphtalène et le ferrocène. On soumet ensuite les blocs poreux ainsi obtenus à un traitement thermique effectué à une température de 300 à 400 °C sous vide pour éliminer le polystyrène, et on effectue enfin un traitement de frittage sous atmosphère d'hydrogène à une température de 600-700 °C pendant 2 heures. Les pièces obtenues à la suite du frittage présentent une densité de 0,4 à 0,7 g/cm³.

Exemple 2

Fabrication de pièces poreuses en bore.

Dans cet exemple, on utilise le second mode de mise en œuvre du procédé de l'invention et l'on fabrique tout d'abord des billes de naphtalène-ferrocène revêtues de polystyrène par pulvérisation dans l'eau chaude à 85 °C d'un mélange comprenant 85 % en poids de naphtalène, 15 % en poids de ferrocène, et 1 % de polystyrène. On obtient ainsi des billes ayant une dimension moyenne de 1,2 mm avec un écart type de 0,2 mm. On introduit ensuite les billes dans le récipient 41 de l'installation représentée sur la figure 3 afin de les revêtir de bore en utilisant une suspension de poudre de bore dans du xylène anhydre contenant du polystyrène. La suspension contient 60 g/l de polystyrène et 165 g/l de poudre de bore contenant de l'anhydride borique (15 % en poids) ayant une granulométrie inférieure à 200 µm et les conditions de revêtement sont les suivantes :

— débit de suspension : 600 cm³/h,
— débit de gaz dans la buse : 20 l/min,
— débit du gaz de fluidisation : 60 m³/h,
— projection circulaire selon un angle de 18°,
— durée : 2 heures.

On utilise alors les billes revêtues pour former une pièce parallélépipédique de 200 mm de hauteur et de section carrée ayant 500 mm de côté par compression isostatique sous une pression de 200 MPa. On soumet ensuite la pièce comprimée ainsi obtenue à deux traitements thermiques réalisés sous vide à une température de 60 °C pour éliminer tout d'abord le matériau porogène (naphtalène + ferrocène) et à une température de 350 °C pour éliminer ensuite le polystyrène. On réalise ensuite un frittage à une température de 1 400 °C sous vide pendant 2 heures.

La pièce frittée ainsi obtenue présente une densité de 0,17.

Exemple 3

Fabrication de pièces en nickel.

On prépare comme dans l'exemple 2 des billes de naphtalène et de ferrocène contenant 1 % de polystyrène, puis on forme sur ces billes un revêtement de polystyrène et de poudre de nickel en utilisant une suspension de nickel dans du xylène contenant en solution le polystyrène, les concentrations de la suspension en nickel et en polystyrène étant respectivement de 750 g/l et 15 g/l et la granulométrie du nickel étant inférieure à 40 µm. Après l'opération de revêtement réalisée dans les mêmes conditions que celles de l'exemple 2, pendant des durées de 1 à 3 heures, on prépare des pièces de mêmes dimensions par compression isostatique à froid sous une pression de 170 MPa.

On soumet ensuite la pièce comprimée au traitement d'élimination du matériau porogène et du liant polystyrène réalisé dans les mêmes conditions que celles de l'exemple 2, puis à un frittage réalisé à des températures de 550 à 650 °C, sous atmosphère d'hydrogène pendant 2 heures.

Les pièces poreuses obtenues dans ces conditions présentent une densité de 0,5 à 3 g/cm³ suivant les taux d'enrobage et les températures de frittage.

Exemple 4

Fabrication de pièces en CaO.

On prépare comme dans l'exemple 2, des billes de naphtalène et de ferrocène contenant 1 % de polystyrène, puis on soumet les billes à un séchage sous vide à une température de 20 °C pour éliminer les traces d'eau qui seraient susceptibles de réagir ensuite avec la chaux. On forme ensuite sur ces billes, un revêtement de polystyrène et de poudre de chaux en utilisant une suspension de chaux dans du xylène contenant en solution le polystyrène, les concentrations de la suspension en chaux et en polystyrène étant respectivement de 250 g/l et 15 g/l et la granulométrie de la chaux étant inférieure à 40 µm. Après l'opération de revêtement réalisée dans les mêmes conditions que celles de l'exemple 2, pendant des durées de 1 à 3 h, on prépare des pièces de mêmes dimensions par compression isostatique à froid, sous une pression de 400 MPa.

On soumet ensuite la pièce comprimée au traitement d'élimination du matériau porogène et du liant polystyrène réalisé dans les mêmes conditions que celles de l'exemple 2, puis à un frittage réalisé à une température de 800 °C, sous faible pression de gaz carbonique pendant 2 h.

**Revendications**

1. Procédé de fabrication de pièces poreuses en matériau inorganique, comprenant les étapes suivantes :

a) fabriquer des billes en matériau porogène revêtues d'un liant organique et dudit matériau inorganique,

b) comprimer à froid les billes revêtues pour former ladite pièce, et

c) soumettre la pièce ainsi obtenue à un traitement thermique sous vide effectué à une température suffisante pour éliminer le matériau porogène par volatilisation.

2. Procédé selon la revendication 1, caractérisé en ce qu'il comprend deux étapes supplémentaires consistant :

d) à éliminer le liant organique par un traitement thermique sous vide, et

e) à fritter ensuite la pièce ainsi obtenue.

3. Procédé selon l'une quelconque des revendications 1 et 2, caractérisé en ce que, dans l'étape a), on fabrique directement les billes de matériau porogène revêtues de liant organique et du matériau inorganique, soit par pulvérisation ou émulsion dans l'eau, soit par pulvérisation dans un gaz, d'un mélange fondu dudit matériau porogène et dudit liant organique, ledit mélange contenant en suspension une poudre dudit matériau inorganique.

4. Procédé selon la revendication 3, caractérisé en ce que le mélange comprend :

— 70 à 92 % en volume de matériau porogène,

— 1,5 à 6 % en volume de liant, et

— 2 à 30 % en volume de matériau inorganique.

5. Procédé selon l'une quelconque des revendications 3 et 4, caractérisé en ce que, dans l'étape a), on transforme ledit mélange fondu en gouttelettes par pulvérisation de ce mélange dans l'eau chaude, en utilisant une buse comportant une buse externe dans laquelle on introduit l'eau chaude et une buse interne dans laquelle on introduit le mélange fondu, de façon à diviser en gouttelettes le mélange fondu évacué par la buse interne, et on refroidit ensuite ces gouttelettes pour former les billes de matériau porogène revêtues du matériau inorganique et du liant organique.

6. Procédé selon l'une quelconque des revendications 1 et 2, caractérisé en ce que dans l'étape a), on fabrique tout d'abord des billes en matériau porogène et l'on revêt ensuite les billes ainsi obtenues du liant organique et dudit matériau inorganique en pulvérisant sur ces billes maintenues à l'état de lit fluidisé dans un gaz inerte, une suspension d'une poudre dudit matériau inorganique dans une solution dudit liant dans un solvant volatil ne dissolvant pas et ne réagissant pas avec ledit matériau inorganique.

7. Procédé selon la revendication 6, caractérisé en ce que l'on fabrique les billes en matériau porogène en transformant le matériau porogène à l'état fondu en gouttelettes par pulvérisation dans l'eau chaude au moyen d'une buse comportant une buse interne dans laquelle on introduit le matériau porogène fondu et une buse externe dans laquelle on introduit l'eau chaude de façon à diviser en gouttelettes le matériau fondu évacué par la buse interne, et en refroidissant ensuite les gouttelettes ainsi obtenues pour former les billes de matériau porogène.

8. Procédé selon l'une quelconque des revendications 1 et 2, caractérisé en ce que, dans l'étape a), on fabrique tout d'abord des billes en matériau porogène revêtues de liant organique, et l'on revêt ensuite les billes ainsi obtenues du même liant organique et dudit matériau inorganique, en pulvérisant sur ces billes maintenues à l'état de lit fluidisé dans un gaz inerte une suspension d'une poudre dudit matériau inorganique dans une solution du liant dans un solvant volatil ne dissolvant pas et ne réagissant pas avec ledit matériau inorganique.

9. Procédé selon la revendication 8, caractérisé en ce que l'on fabrique les billes en matériau porogène revêtues de liant organique, en transformant un mélange fondu du matériau porogène et du liant organique en gouttelettes, par pulvérisation dans l'eau chaude au moyen d'une buse comportant une buse interne dans laquelle on introduit le mélange fondu, et une buse externe dans laquelle on introduit l'eau chaude, de façon à diviser en gouttelettes le mélange fondu évacué par la buse interne, et en refroidissant ensuite les gouttelettes ainsi obtenues pour former les billes de matériau porogène revêtues de liant organique.

10. Procédé selon l'une quelconque des revendications 1 à 9, caractérisé en ce que le matériau porogène est constitué par du naphtalène contenant une quantité de ferrocène suffisante pour que la densité à 80 °C du mélange fondu de naphtalène et de ferrocène soit supérieure à la densité de l'eau.

11. Procédé selon la revendication 10, caractérisé en ce que le mélange de naphtalène et de ferrocène contient de 10 à 20 % en poids de ferrocène.

12. Procédé selon la revendication 1, caractérisé en ce que le liant organique est un polymère thermoplastique choisi dans le groupe comprenant le polystyrène, le polyalphaméthylstyrène et le polyméthacrylate de méthyle.

13. Procédé selon l'une quelconque des revendications 6 et 8, caractérisé en ce que la suspension de matériau inorganique est constituée par une solution du liant organique dans du xylène, contenant la poudre dudit matériau inorganique.

14. Procédé selon l'une quelconque des revendications 3, 6 et 8, caractérisé en ce que la poudre de matériau inorganique a une granulométrie inférieure à 200 μm.

15. Procédé selon la revendication 14, caractérisé en ce que la poudre de matériau inorganique a une granulométrie inférieure à 50 μm.

16. Procédé selon la revendication 1, caractérisé en ce que l'on réalise la compression à froid de l'étape b) sous une pression de 150 à 600 MPa.

17. Procédé selon l'une quelconque des revendications 1 à 9, caractérisé en ce que les billes de matériau porogène ont une dimension de 0,5 à 1,5 mm.

18. Procédé selon l'une quelconque des revendications 1, 2 et 6 à 9, caractérisé en ce que le matériau inorganique est un matériau hygroscopique, inflammable ou radioactif.

## Claims

1. Process for the manufacture of porous articles made of an inorganic material, comprising the following stages :

a) manufacturing beads of pore-forming material, coated with an organic binder and with the said inorganic material,

b) compressing the coated beads cold to form the said article, and

c) subjecting the article thus obtained to a heat treatment under vacuum, carried out at a sufficient temperature to remove the pore-forming material by volatilisation.

2. Process according to Claim 1, characterized in that it comprises two additional stages consisting :

d) in removing the organic binder by a heat treatment under vacuum, and

e) in subsequently sintering the article thus obtained.

3. Process according to either of Claims 1 and 2, characterized in that, in stage a), the beads of pore-forming material coated with organic binder and with the inorganic material are manufactured directly either by spraying or emulsifying in water, or by spraying in a gas, a molten mixture of the said pore-forming material and the said organic binder, the said mixture containing a powder of the said inorganic material as a suspension.

4. Process according to Claim 3, characterized in that the mixture comprises :

70 to 92 % by volume of pore-forming material,
1.5 to 6 % by volume of binder, and
2 to 30 % by volume of inorganic material.

5. Process according to either of Claims 3 and 4, characterized in that, in stage a), the said molten material in converted into droplets by spraying this mixture into hot water, with the use of a jet comprising an outer jet into which hot water is introduced and an inner jet into which the molten mixture is introduced, so as to divide into droplets the molten mixture discharged by the inner jet, and these droplets are subsequently cooled to form the beads of pore-forming material coated with the inorganic material and with the organic binder.

6. Process according to either of Claims 1 and 2, characterized in that, in stage a), beads made of pore-forming material are manufactured first and the beads thus obtained are then coated with the organic binder and with the said inorganic material by spraying onto these beads, which are kept in the form of a fluidized bed in an inert gas, a suspension of a powder of the said inorganic material in a solution of the said binder in a volatile solvent which does not dissolve and which does not react with the said inorganic material.

7. Process according to Claim 6, characterized in that the beads made of pore-forming material are manufactured by converting the pore-forming material in the molten state into droplets by spraying into hot water by means of a jet comprising an inner jet into which the molten pore-forming material is introduced and an outer jet into which the hot water is introduced so as to divide into droplets the molten material discharged through the inner jet, and by subsequently cooling the droplets thus obtained to form the beads of pore-forming material.

8. Process according to either of Claims 1 and 2, characterized in that, in stage a), beads of pore-forming material coated with organic binder are manufactured first and the beads thus obtained are then coated with the same organic binder and with the said inorganic material, by spraying onto these beads, which are kept in the form of a fluidized bed in an inert gas, a suspension of a powder of the said inorganic material in a solution of the binder in a volatile solvent which does not dissolve and which does not react with the said inorganic material.

9. Process according to Claim 8, characterized in that the beads of pore-forming material coated with organic binder are manufactured by converting a molten mixture of the pore-forming material and the organic binder into droplets, by spraying into hot water by means of a jet comprising an inner jet into which the molten mixture is introduced, and an outer jet into which the hot water is introduced, so as to divide into droplets the molten mixture discharged by the inner jet, and by subsequently cooling the droplets thus obtained to form the beads of pore-forming material coated with organic binder.

10. Process according to any one of Claims 1 to 9, characterized in that the pore-forming material consists of naphthalene containing a sufficient quantity of ferrocene for the density of the molten mixture of naphthalene and ferrocene at 80 °C to be higher than the density of water.

11. Process according to Claim 10, characterized in that the mixture of naphthalene and ferrocene contains from 10 to 20 % by weight of ferrocene.

12. Process according to Claim 1, characterized in that the organic binder is a thermoplastic polymer chosen from the group comprising polystyrene, poly-alpha-methylstyrene and polymethyl methacrylate.

13. Process according to either of Claims 6 and 8, characterized in that the suspension of inorganic material consists of a solution of the organic binder in xylene, containing the powder of the said inorganic material.

14. Process according to any one of Claims 3, 6 and 8, characterized in that the powdered inorganic material is less than 200 μm in particle size.

15. Process according to Claim 14, characterized in that the powdered inorganic material is less than 50 μm in particle size.

16. Process according to Claim 1, characterized in that the cold compression in stage b) is produced at a pressure of 150 to 600 MPa.

17. Process according to any one of Claims 1 to 9, characterized in that the beads of pore-forming material are from 0.5 to 1.5 mm in size.

18. Process according to any one of Claims 1, 2 and 6 to 9, characterized in that the inorganic material is a hygroscopic, flammable or radioactive material.

**Patentansprüche**

1. Verfahren zur Herstellung poröser Körper aus anorganischem Material, enthaltend die folgenden Schritte :

a) Herstellen von Kügelchen aus porenbildendem Material, die von einem organischen Bindemittel und dem genannten anorganischen Material umhüllt sind,

b) Komprimieren der umhüllten Kügelchen bei Kälte, um den genannten Körper auszubilden, und

c) Unterwerfen des so erhaltenen Körpers einer thermischen Behandlung unter Vakuum, die bei einer Temperatur ausgeführt wird, die ausreichend ist, um das porenbildende Material durch Verflüchtigung zu beseitigen.

2. Verfahren nach Anspruch 1, dadurch gekennzeichnet, daß es zwei zusätzliche Schritte aufweist, bestehend aus :

d) Beseitigen des organischen Bindemittels durch eine thermische Behandlung unter Vakuum, und

e) Anschließendes Sintern des so erhaltenen Körpers.

3. Verfahren nach einem der Ansprüche 1 und 2, dadurch gekennzeichnet, daß man im Schritt a) die mit dem organischen Bindemittel und dem anorganischen Material umhüllten Kügelchen aus porenbildendem Material direkt entweder durch Pulverisierung oder Emulgierung in Wasser oder durch Pulverisierung in einem Gas einer geschmolzenen Mischung aus dem porenbildenden Material und dem organischen Bindemittel herstellt, wobei die Mischung in Suspension ein Pulver des anorganischen Materials enthält.

4. Verfahren nach Anspruch 3, dadurch gekennzeichnet, daß die Mischung enthält :

70 bis 92 Vol.-% porenbildendes Material,

1,5 bis 6 Vol.-% Bindemittel, und

2 bis 30 Vol.-% anorganisches Material.

5. Verfahren nach einem der Ansprüche 3 und 4, dadurch gekennzeichnet, daß man im Schritt a) die geschmolzene Mischung durch Pulverisierung dieser Mischung in warmem Wasser in Tröpfchen überführt, wobei man eine Düse verwendet, die aus einer äußeren Düse, in die man das warme Wasser einführt, und einer inneren Düse, in die man die geschmolzene Mischung einführt, besteht, um die durch die innere Düse abgegebene geschmolzene Mischung in Tröpfchen zu verteilen, und daß man anschließend diese Tröpfchen abkühlt, um die Kügelchen aus porenbildendem Material, die von dem anorganischen Material und dem organischen Bindemittel umhüllt sind, zu bilden.

6. Verfahren nach einem der Ansprüche 1 und 2, dadurch gekennzeichnet, daß man im Schritt a) zu allererst die Kügelchen aus porenbildendem Material herstellt und daß man anschließend die so erhaltenen Kügelchen mit dem organischen Bindemittel und dem anorganischen Material umhüllt, indem man auf die in Inertgas im Wirbelbettzustand gehaltenen Kügelchen eine Suspension eines Pulvers des anorganischen Materials aufsprüht, das sich in einer Lösung des genannten Bindemittels in einem flüchtigen Lösungsmittel befindet, das das genannte anorganische Material nicht auflöst und mit ihm nicht reagiert.

7. Verfahren nach Anspruch 6, dadurch gekennzeichnet, daß man die Kügelchen aus porenbildendem Material dadurch herstellt, daß man das porenbildende Material in geschmolzenem Zustand in Tröpfchen durch Pulverisierung in warmem Wasser mittels einer Düse überführt, die eine innere Düse, in die man das geschmolzene porenbildende Material einführt, und eine äußere Düse, in die man das warme Wasser einführt, enthält, um das von der inneren Düse abgegebene geschmolzene Material in Tröpfchen aufzuteilen, und indem man anschließend die so erhaltenen Tröpfchen abkühlt, um die Kügelchen aus porenbildendem Material zu bilden.

8. Verfahren nach einem der Ansprüche 1 und 2, dadurch gekennzeichnet, daß man im Schritt a) zunächst die mit organischem Binder umhüllten Kügelchen aus porenbildendem Material herstellt und daß man anschließend die so erhaltenen Kügelchen mit demselben organischen Binder und dem anorganischen Material umhüllt, indem man auf die in einem Inertgas im Wirbelbettzustand gehaltenen Kügelchen eine Suspension eines Pulvers des anorganischen Materials in einer Lösung des Binders in einem flüchtigen Lösungsmittel sprüht, das das genannte anorganische Material nicht auflöst und mit ihm nicht reagiert.

9. Verfahren nach Anspruch 8, dadurch gekennzeichnet, daß man die von organischem Bindemittel umhüllten Kügelchen aus porenbildendem Material in der Weise herstellt, daß man eine geschmolzene Mischung des porenbildenden Materials und des organischen Bindemittels durch Pulverisierung in warmem Wasser mittels einer Düse in Tröpfchen überführt, die eine innere Düse, in die man die geschmolzene Mischung einleitet, und eine äußere Düse, in die man das warme Wasser einleitet, enthält, um die von der inneren Düse abgegebene geschmolzene Mischung in Tröpfchen zu zerteilen, und indem man anschließend die so erhaltenen Tröpfchen abkühlt, um die von organischem Bindemittel umhüllten Kügelchen aus porenbildendem Material zu bilden.

10. Verfahren nach einem der Ansprüche 1 bis 9, dadurch gekennzeichnet, daß das porenbildende Material aus Naphthalin besteht, das eine Menge Ferrocen enthält, die ausreichend ist, daß die Dichte der geschmolzenen Mischung aus Naphthalin und Ferrocen bei 80 °C größer als die Dichte von Wasser ist.

11. Verfahren nach Anspruch 10, dadurch gekennzeichnet, daß die Mischung aus Naphthalin und Ferrocen zwischen 10 und 20 Gew.-% Ferrocen enthält.

12. Verfahren nach Anspruch 1, dadurch gekennzeichnet, daß das organische Bindemittel ein thermoplastisches Polymer ist, das aus der Gruppe ausgewählt ist, die Polystyrol, Polyalphamethylstyrol und Methylpolymethacrylat enthält.

13. Verfahren nach einem der Ansprüche 6 und 8, dadurch gekennzeichnet, daß die Suspension von anorganischem Material von einer Lösung des organischen Bindemittels in Xylol gebildet ist, die das Pulver des anorganischen Materials enthält.

14. Verfahren nach einem der Ansprüche 3, 6 und 8, dadurch gekennzeichnet, daß das Pulver aus anorganischem Material eine Korngröße von weniger als 200 µm hat.

15. Verfahren nach Anspruch 14, dadurch gekennzeichnet, daß das Pulver aus anorganischem Material eine Korngröße von weniger als 50 µm hat.

16. Verfahren nach Anspruch 1, dadurch gekennzeichnet, daß man die Verdichtung bei Kälte im Schritt b) unter einem Druck von 150 bis 600 MPa ausführt.

17. Verfahren nach einem der Ansprüche 1 bis 9, dadurch gekennzeichnet, daß die Kügelchen aus porenbildendem Material eine Größe von 0,5 bis 1,5 mm haben.

18. Verfahren nach einem der Ansprüche 1, 2 und 6 bis 9, dadurch gekennzeichnet, daß das anorganische Material ein hygroskopisches, brennbares oder radioaktives Material ist.

FIG.1

1

FIG.2

0 119 913

2

FIG.3

FIG.4

FIG.5

EAU

55

73

53

57

59

61 62

51

55

63

75

73

65

68

61

61

61

67

77

69

79

71

5